# EUROPEAN PATENT SPECIFICATION

(11) **EP 4 174 594 B1**
(45) Date of publication and mention of the grant of the patent: **04.03.2026**
(21) Application number: 22197015.5
(22) Date of filing: 22.09.2022
(51) Int. Cl.: G05B 19/4093, G05B 19/418, B23Q 3/155

(54) **METHOD FOR ARRANGING TOOLS IN A WAREHOUSE AND WORKING CENTER IMPLEMENTING SUCH METHOD**
VERFAHREN ZUM ANORDNEN VON WERKZEUGEN IN EINEM LAGER- UND ARBEITSZENTRUM, DAS EIN SOLCHES VERFAHREN IMPLEMENTIERT
PROCEDE DE RANGEMENT D'OUTILS DANS UN ENTREPOT ET CENTRE DE TRAVAIL MISE EN OUUVRE D'UN TEL PROCEDE

(30) Priority: 26.10.2021 IT 202100027455
(43) Date of publication of application: 03.05.2023
(73) Proprietor: SCM Group S.p.A., 47921 Rimini (RN) (IT)
(72) Inventor: MUCCIOLI, Gianluca, 47921 Rimini (IT); ROSSINI, Simone, 47921 Rimini (IT); ANTONIACCI, Gianluca, 47921 Rimini (IT); CECCHI, Marco, 47921 Rimini (IT)
(74) Representative: Tiburzi, Andrea

(56) References cited:
- WO-A1-2019/168018
- WO-A1-2020/177836
- CN-A- 112 705 983
- US-A1- 2005 010 325
- US-A1- 2005 027 378
- US-A1- 2007 293 379
- US-A1- 2016 187 871
- US-A1- 2016 334 777
- US-A1- 2018 250 784

## Description

The present invention relates to a method of arranging tools in a warehouse.

The present invention also relates to a working center that implements such a method.

### Field of the invention

More in detail, the invention relates to a method of the aforesaid type, designed and implemented in particular for the arrangement of tools in a tool warehouse of a machine for working pieces made of wood, plastic, metal, fiberglass, glass, ceramics, and the like, but which can be used for warehouses of other types of working machines.

In the following the description will be addressed to linear, circular, rotary, fixed, mobile warehouses, for machine tools, but it is clear that the same should not be considered limited to this specific use.

### Prior art

As is well known, there are currently machining centers equipped with one or more tool warehouses; the tools can be selected and picked up from the warehouse by an operating head to perform one or more machining operations, and then be put away once the machining is finished.

The tool warehouses comprise a plurality of adjacent housings, in which the tools can be stored. The tools have various shapes and sizes, which in some cases prevent two tools from being stored in adjacent slots, as they would collide.

To date, in the case of a bulky tool stored in a housing, it is necessary to leave the adjacent seats free, to prevent other tools from coming into contact with the bulky tool itself.

Currently, in fact, to arrange the tools in a warehouse, the maximum overall sizes of the tool itself are considered, comparing its structure to a cylinder that entirely encloses the tool.
Documents US2005027378, US2007293379 and US2005010325 disclose known warehouses for machine tools.

One first obvious disadvantage of this solution is that very frequently some warehouse housings remain unused, considerably reducing the number of tools that can be stored simultaneously in the same warehouse and causing the need to use other warehouses to store all the tools necessary for the machining.

A further disadvantage of this solution is the increase in tool change times, as it is necessary to access multiple warehouses to pick up the tool needed for machining each time.

### Object of the invention

It is, therefore, object of the present invention to provide a method of arranging tools in a tool warehouse that maximizes the number of usable housings and, therefore, optimizes the arrangement of the tools in the housings.

A further object of the present invention is to provide a working center that implements such a method.

### Object of the invention

The scope of protection is determined by the appended claims.

### Brief description of the figures

The present invention will be now described, for illustrative but not limitative purposes, according to its preferred embodiments, with particular reference to the figures of the enclosed drawings, wherein:
figure 1 shows an axonometric view of a working center, object of the present invention, in a first embodiment;
figure 2 shows a second axonometric view of the working center shown in figure 1;
figure 3 shows a top view of the working center, in which a warehouse has a first configuration, object of the present invention;
figure 4 shows a side view of the working center of figure 3;
figure 5 shows a top view of the machining center, in which a warehouse has a second configuration, object of the present invention;
figure 6a shows a partial axonometric view of the working center, in a second embodiment;
figure 6b shows a detail of figure 6a;
figure 7a shows a partial axonometric view of the working center, in a third embodiment;
figure 7b shows a detail of figure 7a;
figure 8a shows a partial axonometric view of the working center, in a fourth embodiment;
figure 8b shows a detail of figure 8a;
figure 9 shows a schematic view of an example of an arrangement of tools in a warehouse in the working center;
figure 10 shows a schematic view of a second example of arrangement of tools in a warehouse in the working center; and
figure 11 shows a schematic view of a third example of arrangement of tools in a warehouse in the working center.

### Detailed description

In the various figures, similar parts will be indicated with the same numerical references.

With reference to the attached figures, it is possible to observe a working center C for machining pieces made of wood, plastic, metal, fiberglass, ceramic, glass, and the like, object of the present invention, in a first embodiment.

The working center C comprises a base 1, for supporting the working center C on the ground, a working plane 11, for supporting the workpieces, arranged on said base 1, a mobile carriage 2, at least one machining head 3 and at least one warehouse 4.

The base 1 has an elongated shape and develops according to a prevalent direction X from one end to the opposite one of the working center C.

The mobile carriage 2 supports said at least one machining head 3.

Between the machining head 3 and the working plane 11 there is a relative movement according to one, two, or three linear translation axes, and a rotation according to one, two, three, or more rotation axes. In the embodiment shown, the machining head 3 can move with respect to said work plane 11 according to three linear axes, and rotate around two rotation axes, and comprises a spindle 31 and a tool holder 32, which can be coupled to the spindle 31.

The spindle 31 is driven by an electric motor and rotates on itself around a rotation axis Y. Each tool holder 32 holds a tool 33ₖ, to perform a specific machining.

The warehouse 4 houses said at least one tool holder 32.

Said at least one warehouse 4 can be of the movable linear, fixed linear, or rotary type.

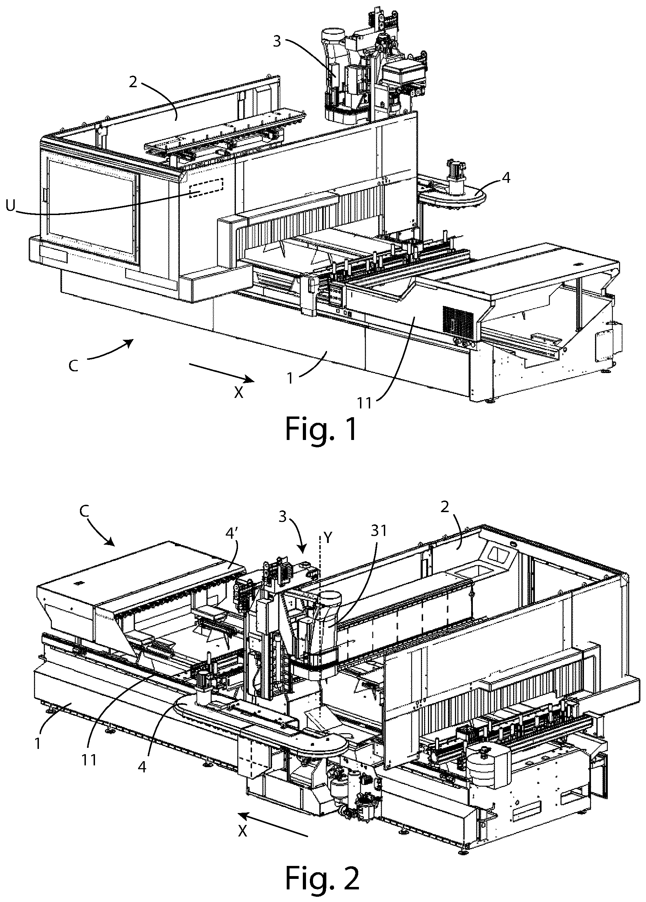

With reference to figures 1 and 2, said working center comprises a warehouse 4 of the rotary type and a warehouse 4' of the mobile or fixed linear type.

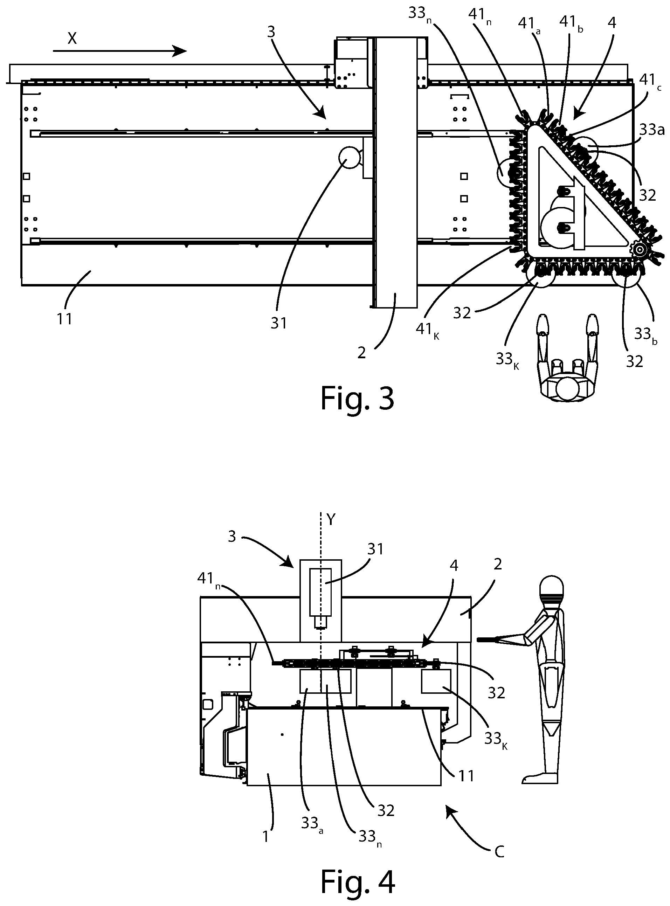

Said working center C can however also comprise further warehouses of different types, as shown in figures 3-5.

For simplicity of description, said warehouse 4 is described, however the description also refers to other types of warehouses.

Said warehouse 4 comprises a plurality of housings 41_{a, b, ..., n}, each one suitable for housing a tool-holder 32.

The machining head 3 is capable of picking up said tool-holders 32, and placing them in predetermined housings 41_{a , b,..., n}.

The association between the single housing and the single tool holder 32 is carried out univocally, for the entire duration of the workpiece machining program, as it will be described in detail below.

Said working center C also comprises a logic control unit U, in particular of numerical control type, in which one or more workpiece machining programs are stored, as well as tables of specific data and parameters.

In particular, in the logic control unit U data related to the form and the dimensions of the tools 33_{a, b, ..., n}, as well as data relating to the number of housings 41_{a, b, ..., n} and their reciprocal position in the warehouse 4 are stored. The data relating to the shape and sizes of the tools 33_{a, b,..., n} must allow knowing the actual two-dimensional and three-dimensional sizes of the tools 33_{a, b,..., n} themselves. It is, therefore, necessary to have digital models of the tools 33_{a, b,..,}.

Said digital models can include, for example, three-dimensional images of the tools 33_{a, b, ..., n}, acquired through three-dimensional scanning systems, such as, for example, laser scanners or 3D video cameras, three-dimensional CAD models, or photographs of the tools 33_{a, b, ..., N}, taken by an operator before starting the machining, using a device such as a *smartphone,* cameras and the like, and then processed to generate a three-dimensional model.

A predetermined minimum distance value A is also stored in said logic control unit U, which is the minimum distance at which it is possible to place a first 33ₖ and a second 33ⱼ tool.

Said minimum distance A is the minimum distance between each point of the solid of rotation of a first tool 33ₖ and each point of the solid of rotation of a second tool 33ⱼ.

The control logic unit U can be connected to remote devices, such as, for example, machine PCs, *tablets, smartphones* or *cloud,* from which it can receive data relating to the shape and size of the tools 33_{a, b, ..., n}, the number of housings 41_{a, b, ..., n} and their reciprocal position in the warehouse 4.

The logic control unit U also stores the information relating to the exact positioning of the individual tool-holders 32, and therefore of the respective tools 33_{a, b,..., n}, in the housings 41_{a, b,..., n} of the warehouse 4.

The operation of the machining center C, in the first embodiment described above, is as follows.

When it is intended to arrange the tool holders 32 and the respective tools 33_{a, b, ..., n} in the warehouse 4, the logic control unit U receives said data relating to the number, the shape, and the sizes of the tools 33_{a, b, ..., n} and processes them, to obtain the overall sizes of the tools 33_{a, b,..., n}.

Said logic control unit U carries out initial processing to select an optimal arrangement of said tools 33_{a, b,..., n} in said housings 41_{a, b,..., n} of the warehouse 4, according to some criteria.

In particular, a first criterion takes into account the occupation of the housings according to the shape of the tools 33_{a, b,..., n}, starting from the solid of rotation of each tool 33ₖ.

Therefore, the logic control unit U calculates all the arrangements in which between each pair of tools 33ₖⱼ there is a distance equal to or greater than said minimum distance A, and then selects the arrangement in which there is the greatest number of housings 41_{a, b,..., n} that can be used by tools 33_{a, b,.., n}.

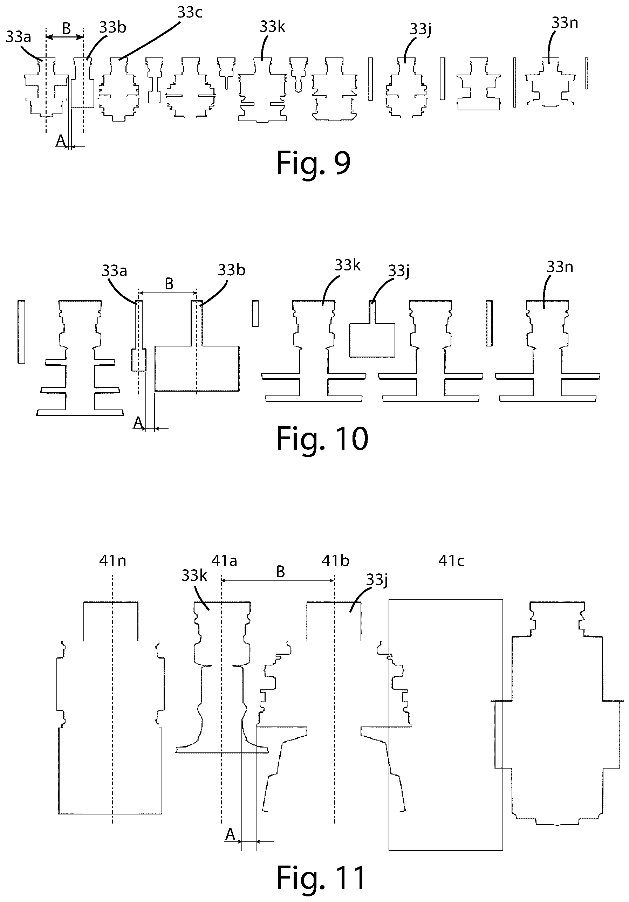

In particular, in a first step, the control logic unit U generates a symmetrical matrix of the center distances, in which it reports the minimum center distances that must exist between two tools 33ₖⱼ, so as to respect said minimum distance A. In particular, referring to figures 9 - 11, is defined as the minimum distance A, the logic control unit U calculates by means of an algorithm the minimum distance B at which the two tools 33ₖⱼ can be arranged so that their axes are parallel, to satisfy the minimum distance requirement A; the process is repeated for each possible pair of tools 33ₖⱼ and the respective minimum center distances are reported in said center distances matrix.

Having known the data relating to the number of housings 41_{a, b,..., n} and their reciprocal position in the warehouse 4, the control logic unit U calculates the minimum distances between each possible pair of housings 41_{k, n}.

The logic control unit U then performs a calculation of the permutations of the tools 33_{a, b,..., n} in the housings 41_{a, b,..., n}; during the calculation, for each tool 33ₖ chosen to be positioned in the first housing 41_{a,} the control logic unit U compares the minimum distance between said first housing and the subsequent housing 41_{b} with the minimum spacing required between the tool 33ₖ and any other tool 33ⱼ.

If said minimum distance between the first 41ₐ and the second 41_{b} housing is greater than or equal to said minimum required distance between the tools 33ₖ and 33ⱼ, the arrangement of the tool 33ₖ in housing 41ₐ and of the tool 33ⱼ in slot 41_{b} is considered possible.

The process is repeated for the subsequent housings 41_{b} and 41_{c}, comparing the minimum distance between them with the minimum distance needed between the tool₃₃ⱼ and any other remaining tools.

If, on the other hand, said minimum distance between the first 41ₐ and the second 41_{b} housing is less than said minimum distance required between the tools 33ₖ and 33ⱼ, the tool 33ⱼ must be arranged in the subsequent housing 41_{c} to the second housing 41_{b}. The process then continues for all the pairs formed by the subsequent housing 41_{c} and all the others remaining housings 41ₖ, comparing their minimum distance with the minimum necessary spacing between the tool 33ₖ and any other remaining tools.

With reference to figure 9, it is also possible that, before starting the arrangement procedure, some tools Uₚ, which occupy some of the housings 41_{a, b,..., n} are already available in the warehouse. In this case, the calculation of the permutations is performed taking into account the housings 41_{a, b,..., n} already occupied and the overall sizes of the tools Uₚ allocated therein.

In particular, the logic control unit U performs the calculation of the permutations obtainable both by moving the tools already present in said housings 41_{a, b, ..., n}, and by arranging the new tools in the remaining housings 41_{a, b, ..., n}. The logic control unit U calculates the number of tool movements necessary to obtain each calculated arrangement.

In this case, once the permutations have been calculated, the control logic unit U selects those that minimize both the number of housings 41_{a, b, ... , n} occupied, and the number of movements of the tools already present, necessary for obtaining the arrangement. The logic control unit U also calculates the sequence of movements necessary to obtain the selected arrangements and determines which tools can remain in the housings 41_{a, b,.., n} that they initially occupy.

The calculation of the sequence of movements necessary to obtain the final arrangement can also take into account the movements of tools 33_{a, b,.., n} in other warehouses.

At the end of the calculation of the permutations, the control logic unit U provides a list of possible arrangements of the tools 33_{a, b,.., n} in said housings 41_{a, b,.., n}.

The arrangements are selected, which, for the same number of tools 33_{a, b,.., n} allocated, minimize the number of housings 41_{a, b,.., n} occupied.

If there are two or more possible arrangements with the same number of housings 41_{a, b, ..., n} occupied, the control logic unit U selects the arrangement in which the gaps between the tools 33_{a, b, ..., n} are minimized, i.e., arrangements in which large tools are arranged close to each other.

In case of the number of tools 33_{a, b,} ..., ₙ is excessively large to perform the calculation of all the possible permutations, the control logic unit U implements a first heuristic, calculating the permutations relating to a first subset of housings 41_{a, b,..., k}.

The logic control unit U selects the arrangements in which the gaps between the tools arranged in said first subset of housings 41_{a, b,..., k} are minimized; the logic control unit U then continues the calculation of the permutations including all the slots 41_{k + 1,..., n} remaining for the selected arrangements.

If said working center C comprises two or more warehouses 4, the arrangements are selected which maximize the number of tools 33_{a, b,..., n} which can be arranged together in the first warehouse, so as to be easily accessible. Alternatively, the logic control unit U implements a second heuristic, comparing the tools 33_{a, b, ..., n} frequency of use in said one or more part machining programs with the possible arrangements, and selects the arrangement in which the most frequently used tools during said machining programs are arranged in the first warehouse 4.

After selecting the optimal arrangement of the tools 33_{a, b, ..., n} in said housings 41_{a, b, ..., n}, the unit control logic U stores the arrangement and controls said machining head 3 so as to arrange the tools 33_{a, b,..., n} in said housings 41_{a, b,..., n} of said warehouse 4 according to the selected arrangement.

It is also possible that said selected arrangement is shown to the operator, who then arranges the tools 33_{a, b,..., n} in the warehouse 4 as indicated by the selected arrangement.

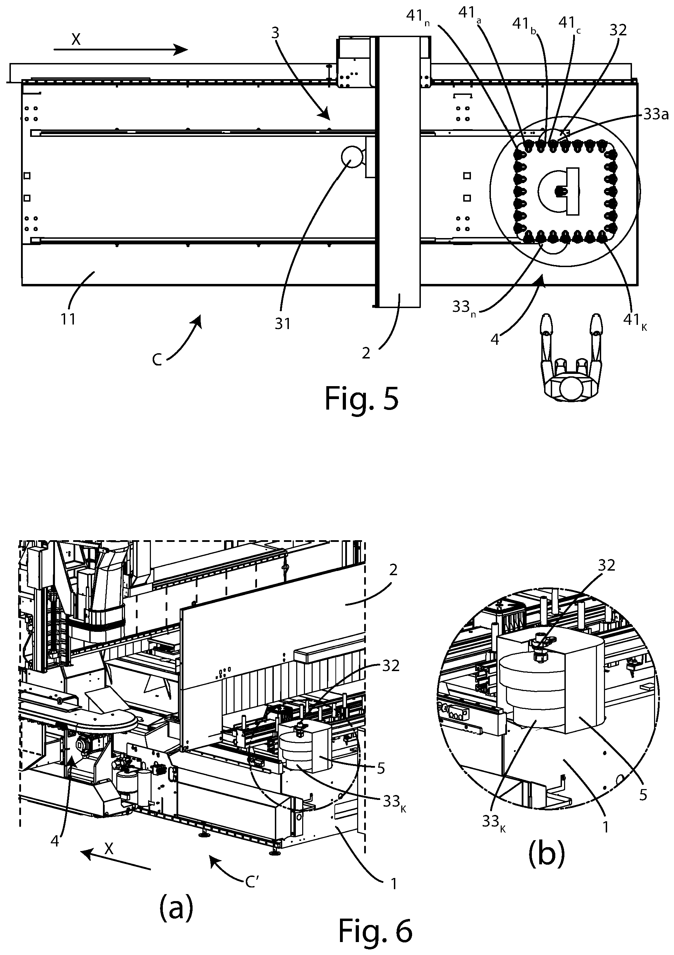

With reference to figures 6a and 6b, in a second embodiment, the working center C' is, in general terms, analogous to said working center C.

The structure of the working center C' differs from the structure of the working center C only for the fact of comprising a scan device 5 of the tools 33_{a, b,.., n}.

Said scan device 5 is arranged on said base 1.

The scan device 5 is capable of scanning said tools 33_{a, b,..., n}, to determine their three-dimensional conformation, shape, and sizes.

The scanning of each tool 33ₖ can take place for half of its structure, and then reconstruct the entire structure by symmetry.

Alternatively, said tool 33ₖ can be rotated inside said scan device 5, which acquires all its data.

The tool 33ₖ can be rotated by the machining head 3 or by other methods.

The scan device 5 is also connected to said logic control unit U, so as to send said data of the tools 33_{a, b,..., n}.

The operation of the working center C', in said second embodiment described above, is, in general terms, similar to the operation of the working center C in said first embodiment.

The operation of the machining center C' differs from the operation of the machining center C, only in that the machining head 3 arranges, one at a time, each tool holder 32 and the respective tool 33ₖ in the scan device 5.

The scan device 5 scans said tool 33ₖ and sends said data to the control logic unit U.

The control logic unit U receives said data for each tool 33ₖ from the scan device 5, with which the operation continues in the same way as the operation of said first embodiment.

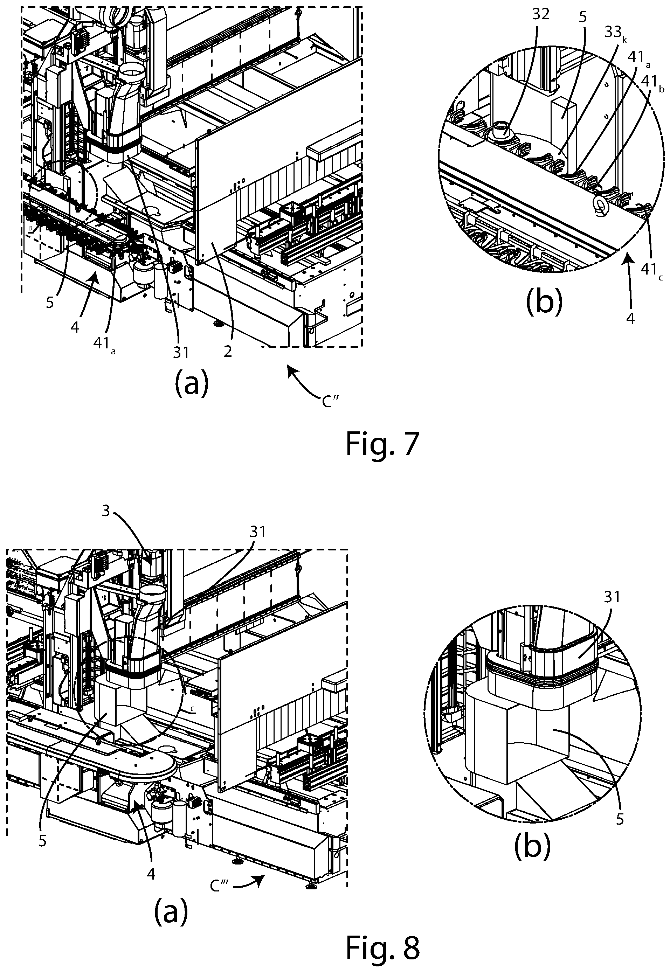

With reference now to figures 7a and 7b, in a third embodiment, the machining center C" is, in general terms, similar to said machining center C' according to the second embodiment.

The structure of the working center C" differs from the structure of the working center C' just in that said scan device 5 is arranged in proximity to said warehouse 4, so as to scan the tools 33_{a, b,..., n}, while these are housed in the housings 41_{a, b,..., n} and the warehouse 4 moves, making said tools 33_{a, b,..., n} sliding in front of the scan device 5 itself. If the working center C comprises two or more warehouses 4, it is possible to arrange a scan device 5 in proximity to each warehouse 4.

The operation of the working center C", in said third embodiment is, in general terms, analogous to the operation of said working center C' according to the second embodiment.

The operation of the machining center C" differs from the operation of the machining center C' just for the fact that the scan device 5 scans the tools 33_{a, b, ..., n} when these are arranged in the warehouse 4.

The warehouse 4 is moved to bring each tool holder 32 and the respective tool 33ₖ in front of said scan device 5, in order to scan the tool 33ₖ itself.

With reference to figures 8a and 8b, in a fourth embodiment, the working center C‴ is, in general terms, similar to said working center C' according to the second embodiment; the structure of the machining center C‴ differs from the structure of the machining center C', solely for the fact that said scan device 5 is configured to be coupled to the spindle 31 of said machining head 3, by means of a HSK quick coupling.

The operation of the machining center C‴ in the fourth embodiment is, in general terms, similar to the operation of said machining center C' according to the second embodiment.

The operation of the working center C ‴ differs from the operation of the working center C', only due to the fact that the machining head 3 picks up the scan device 5 and moves it along said warehouse 4, so as to perform a scanning of each tool 33ₖ arranged in the warehouse 4 itself.

### Advantages

An obvious advantage of the present invention is the possibility of acquiring the actual shape and sizes of the tools.

A further advantage of the present invention is the possibility of maximizing the occupation of the housings in the warehouse based on the actual shape and size of the tools, avoiding collisions between the tools themselves during picking up and releasing them into the warehouse.

## Claims

1. Method for controlling a working center (C) comprising a working head, for working pieces made of wood, plastic, metal, glass, fiberglass, ceramic, and being configured for arranging tools inside at least one warehouse (4) included in the working center (C) and comprising a plurality of housings (41_{a,b,...,n}), the working center comprising a logic control unit (U) provided with at least one predetermined program for working said pieces, wherein the method comprises the following steps:
*a*. receiving data relating to the shape and the size of at least one first (33ₖ) and second (33ⱼ) tool;
*b*. receiving data relating to at least the number of said housings (41_{a,b,...,n}) and their reciprocal position in said at least one warehouse (4) and receiving a predetermined minimum distance (A) at which it is possible to place a first (33ₖ) and a second (33ⱼ) tool;
*c*. verifying, according to said data received in said steps a. and b., that at least one arrangement of said at least one first (33ₖ) and second (33ⱼ) tool in said plurality of housings (41_{a,b,...,n}) complies with at least one first criterion, said first criterion comprising at least the calculation of the minimum center distance (B) between said at least one first (33ₖ) and second (33ⱼ) tool on the basis of said minimum distance (A);
*d*. housing said at least one first (33ₖ) and second (33ⱼ) tool in said plurality of housings (41_{a,b,...,n}) according to said at least one arrangement.

2. Method according to the preceding claim, **characterized in that** said step d. comprises the following sub steps:
*d1.* calculating each possible permutation of the arrangement of said at least one first (33ₖ) and second (33ⱼ) tool in said plurality of housings (41_{a,b,...,n}) of said at least one warehouse (4) and, for each housing (41_{a,b,..,n}), comparing the minimum distance between said housing and the remaining housings with the minimum necessary spacing between said first tool (33k) and said second tool (33j) ;
*d2.* for the same number of tools (33_{a, b,..., n}) allocated, choosing the permutation that minimizes the number of said housings (41_{a,b,...,n}) occupied.

3. Method according to the preceding claim, **characterized in that** said step d. comprises, before or after said step d2, the following step:
*d3.* choosing the permutation in which said tools (33ₖ, 33ⱼ) to be housed in said housings (41_{a,b,...,n}) are the tools most frequently used during the working.

4. Method according to any one of the claims 2 or 3, **characterized in that** said step d. comprises, before or after said step d2, the following step:
*d4.* if one or more tools (Uₚ) are already arranged in said housings (41_{a,b,...,n}), calculating the permutations obtainable both by moving the tools already present in said housings (41_{a, b, ..., n}) and by arranging the new tools in the remaining housings (41_{a, b, ..., n}) and choosing the permutation that minimizes the displacement of said tools (Uₚ) already arranged.

5. Method according to any one of the preceding claims, **characterized in that** said step a. comprises at least one of the following sub steps:
*a1.* receiving three-dimensional images of said at least one first (33ₖ) and second (33ⱼ) tool;
*a2.* receiving photo of said at least one first (33ₖ) and second (33ⱼ) tool and determining their dimensions;
*a3.* receiving a three-dimensional scan of said at least one first (33ₖ) and second (33ⱼ) tool.

6. Working center (C) for working pieces made of wood, plastic, metal, glass, fiberglass, ceramic and comprising:
a logic control unit (U), provided with at least one predetermined program for working said pieces,
at least one first and second tool holder (32), to which can be coupled respectively a first (33ₖ) and a second (33ⱼ) tool for working said pieces according to said working program,
at least one warehouse (4), for housing said first (33ₖ) and second (33ⱼ) tool, a machining head,
wherein said working center (C) comprises a tool scan device (5), connected to said logic control unit (U), for acquiring data relating to the shape and dimensions of said at least one first (33ₖ) and second (33ⱼ) tool, wherein said logic control unit (U) is capable of controlling the the machining head for carrying out the method according to any one of claims 1-5.

7. Working center (C) according to the preceding claim, **characterized**
**in that** said working center (C) comprises a base (1), and
**in that** said scan device (5) is coupled to said base (1).

8. Working center (C) according to claim 6, **characterized**
**in that** said warehouse (4) is movable, and
**in that** said scan device (5) is arranged in correspondence of said warehouse (4), for acquiring said data relating to the shape and dimensions of said at least one first (33ₖ) and second (33ⱼ) tool, when they are housed in said warehouse (4).

9. Working center (C) according to claim 6, **characterized in that** said scan device (5) can be coupled to said working head (3) and can be moved near said at least one warehouse (4).

10. Working center (C) according to any one of claims 6-9, **characterized in that** said logic control unit (U) can be connected to a remote device, such as a smartphone, tablet or cloud device, for receiving said data relating to the shape and dimensions of said at least one first (33ₖ) and second (33ⱼ) tool.

11. Computer program comprising instructions which, when the program is executed by a computer, cause the computer to execute the method according to any one of claims 1 - 5.

12. Computer readable storage medium comprising instructions which, when executed by a computer, cause the computer to execute the method steps according to any one of claims 1 - 5.

## Patentansprüche

1. Verfahren zur Steuerung eines Bearbeitungszentrums (C)
das einen Bearbeitungskopf für die Bearbeitung von Werkstücken aus Holz, Kunststoff, Metall, Glas, Glasfaser, Keramik umfasst und für die Anordnung von Werkzeugen in mindestens einem im Bearbeitungszentrum (C) enthaltenen Lager (4) konfiguriert ist, und
mit einer Vielzahl von Gehäusen (41_{a,b,...,n}), wobei das Bearbeitungszentrum eine logische Steuereinheit (U) umfasst, die mit mindestens einem vorbestimmten Programm zur Bearbeitung der Teile versehen ist,
wobei das Verfahren die folgenden Schritte umfasst:
*a*. Empfangen von Daten, die sich auf die Form und die Größe von mindestens einem ersten (33ₖ) und zweiten (33ⱼ) Werkzeug beziehen;
*b*. Empfangen von Daten, die sich zumindest auf die Anzahl der Gehäuse (41_{a,b,...,n}) und ihre gegenseitige Position in dem mindestens einen Lager (4) beziehen, und Empfangen eines vorbestimmten Mindestabstands (A), in dem es möglich ist, ein erstes (33ₖ) und ein zweites (33ⱼ) Werkzeug zu platzieren;
*c*. Überprüfen, entsprechend den in den Schritten a. und b., erhaltenen Daten, dass mindestens eine Anordnung des mindestens einen ersten (33ₖ) und zweiten (33ⱼ) Werkzeugs in der Vielzahl von Gehäusen (41_{a,b,...,n}) mindestens ein erstes Kriterium erfüllt, wobei das erste Kriterium mindestens die Berechnung des minimalen Mittenabstands (B) zwischen dem mindestens einen ersten (33ₖ) und zweiten (33ⱼ) Werkzeug auf der Grundlage des minimalen Abstands (A) umfasst;
*d*. Unterbringen des mindestens einen ersten (33ₖ) und zweiten (33ⱼ) Werkzeugs in der Vielzahl von Gehäusen (41_{a,b,...,n}) gemäß der mindestens einen Anordnung.

2. Verfahren nach dem vorstehenden Anspruch, **dadurch gekennzeichnet, dass** der Schritt d. die folgenden Teilschritte umfasst:
*d1.* Berechnen jeder möglichen Permutation der Anordnung des mindestens einen ersten (33ₖ) und zweiten (33ⱼ) Werkzeugs in der Vielzahl von Gehäusen (41_{a,b,...,n}) des mindestens einen Lagers (4) und, für jedes Gehäuse (41_{a,b,...,n}) den Mindestabstand zwischen dem Gehäuse und den übrigen Gehäusen mit dem erforderlichen Mindestabstand zwischen dem ersten Werkzeug (33ₖ) und dem zweiten Werkzeug (33ⱼ) zu vergleichen;
*d2.* für die gleiche Anzahl von Werkzeugen (33_{a,b,..., n}) zugewiesen, wobei die Permutation gewählt wird, die die Anzahl der besetzten Gehäuse (41_{a,b,...,n}) minimiert.

3. Verfahren nach dem vorstehenden Anspruch, **dadurch gekennzeichnet, dass** der Schritt d. vor oder nach dem Schritt d2 den folgenden Schritt umfasst:
*d3.* Auswahl der Permutation, in der die Werkzeuge (33ₖ, 33ⱼ), die in den Gehäusen (41_{a,b,...,n}) untergebracht werden sollen, die während der Arbeit am häufigsten verwendeten Werkzeuge sind.

4. Verfahren nach einem der Ansprüche 2 oder 3, **dadurch gekennzeichnet, dass** der Schritt d. vor oder nach dem Schritt d2 den folgenden Schritt umfasst:
*d4*. wenn ein oder mehrere Werkzeuge (Uₚ) bereits in den Gehäusen (41_{a.b,...,n}) angeordnet sind, Berechnen der Permutationen, die sowohl durch Verschieben der bereits in den Gehäusen (41_{a, b,...,n}) als auch durch die Anordnung der neuen Werkzeuge in den verbleibenden Aufnahmen (41_{a, b,...,n}) erhalten werden können, und diejenige Permutation zu wählen, die die Verschiebung der bereits angeordneten Werkzeuge (Uₚ) minimiert.

5. Verfahren nach einem der vorstehenden Ansprüche, **dadurch gekennzeichnet, dass** der Schritt a. mindestens einen der folgenden Teilschritte umfasst:
*a1.* Empfangen dreidimensionaler Bilder des mindestens einen ersten (33ₖ) und zweiten (33ⱼ) Werkzeugs;
*a2*. Empfangen eines Fotos des mindestens einen ersten (33ₖ) und zweiten (33ⱼ) Werkzeugs und Bestimmen ihrer Abmessungen;
*a3.* Empfangen eines dreidimensionalen Scans des mindestens einen ersten (33ₖ) und zweiten (33ⱼ) Werkzeugs.

6. Arbeitszentrum (C) zur Bearbeitung von Werkstücken aus Holz, Kunststoff, Metall, Glas, Glasfaser, Keramik und anderen Materialien:
eine logische Steuereinheit (U), die mit mindestens einem vorbestimmten Programm zur Bearbeitung der Teile ausgestattet ist,
mindestens einen ersten und einen zweiten Werkzeughalter (32), an die jeweils ein erstes (33ₖ) und ein zweites (33ⱼ) Werkzeug zur Bearbeitung der Teile gemäß dem Bearbeitungsprogramm gekoppelt werden kann,
mindestens ein Lager (4) zur Aufnahme des ersten (33ₖ) und zweiten (33ⱼ) Werkzeugs, einen Bearbeitungskopf,
wobei das Arbeitszentrum (C) Folgendes umfasst
eine Werkzeugabtastvorrichtung (5), die mit der logischen Steuereinheit (U) verbunden ist, um Daten zu erfassen, die sich auf die Form und die Abmessungen des mindestens einen ersten (33ₖ) und zweiten (33ⱼ) Werkzeugs beziehen, wobei die logische Steuereinheit (U) in der Lage ist, den Bearbeitungskopf zu steuern, um das Verfahren nach einem der Ansprüche 1-5 durchzuführen.

7. Arbeitszentrum (C) nach dem vorstehenden Anspruch, **dadurch gekennzeichnet**
**dass** das Arbeitszentrum (C) einen Sockel (1) umfasst, und
**dass** die Abtastvorrichtung (5) mit der Basis (1) gekoppelt ist.

8. Arbeitszentrum (C) nach Anspruch 6, **dadurch gekennzeichnet**
**dass** das Lager (4) beweglich ist, und
**dass** die Abtastvorrichtung (5) in Übereinstimmung mit dem Lager (4) angeordnet ist, um die Daten zu erfassen, die sich auf die Form und die Abmessungen des mindestens einen ersten (33ₖ) und zweiten (33ⱼ) Werkzeugs beziehen, wenn sie in dem Lager (4) untergebracht sind.

9. Arbeitszentrum (C) nach Anspruch 6, **dadurch gekennzeichnet, dass** die Scanvorrichtung (5) mit dem Arbeitskopf (3) gekoppelt werden kann und in die Nähe des mindestens einen Lagers (4) bewegt werden kann.

10. Arbeitszentrum (C) nach einem der Ansprüche 6-9, **dadurch gekennzeichnet, dass** die logische Steuereinheit (U) mit einem entfernten Gerät, wie einem Smartphone, einem Tablet oder einem Cloud-Gerät, verbunden werden kann, um die Daten bezüglich der Form und der Abmessungen des mindestens einen ersten (33ₖ) und zweiten (33ⱼ) Werkzeugs zu empfangen.

11. Computerprogramm mit Anweisungen, die, wenn das Programm von einem Computer ausgeführt wird, den Computer veranlassen, das Verfahren nach einem der Ansprüche 1-5 auszuführen.

12. Computerlesbares Speichermedium, das Anweisungen umfasst, die, wenn sie von einem Computer ausgeführt werden, den Computer veranlassen, die Verfahrensschritte gemäß einem der Ansprüche 1-5 auszuführen.

## Revendications

1. Procédé de contrôle d'un centre d'usinage (C)
comprenant une tête de travail, pour travailler des pièces en bois, plastique, métal, verre, fibre de verre, céramique, et configurée pour disposer des outils à l'intérieur d'au moins un magasin (4) inclus dans le centre d'usinage (C) et
comprenant une pluralité de logements (41_{a,b,...,n}), le centre d'usinage comprenant une unité de commande logique (U) dotée d'au moins un programme prédéterminé pour le travail desdites pièces,
dans lequel le procédé comprend les étapes suivantes:
a. recevoir des données relatives à la forme et à la taille d'au moins un premier (33ₖ) et un second (33ⱼ) outil;
*b*. recevoir des données relatives au moins au nombre desdits logements (41_{a,b,...,n}) et à leur position réciproque dans ledit au moins un entrepôt (4) et recevoir une distance minimale prédéterminée (A) à laquelle il est possible de placer un premier (33ₖ) et un second (33ⱼ) outil;
*c*. vérifier, selon lesdites données reçues dans lesdites étapes a. et b., qu'au moins une disposition dudit au moins un premier (33ₖ) et second (33ⱼ) outil dans ladite pluralité de logements (41_{a,b,...,n}) est conforme à au moins un premier critère, ledit premier critère comprenant au moins le calcul de l'entraxe minimal (B) entre ledit au moins un premier (33ₖ) et second (33ⱼ) outil sur la base de ladite distance minimale (A);
*d.* loger ledit au moins un premier (33ₖ) et un second (33ⱼ) outil dans ladite pluralité de logements (41_{a,b,...,n}) selon ledit au moins un agencement.

2. Procédé selon la revendication précédente, **caractérisé en ce que** ladite étape d. comprend les sous-étapes suivantes:
*d1.* calculer chaque permutation possible de la disposition dudit au moins un premier (33ₖ) et second (33ⱼ) outil dans ladite pluralité de logements (41_{a,b,...,n}) dudit au moins un entrepôt (4) et, pour chaque logement (41_{a,b,..,n}), comparer la distance minimale entre ledit logement et les logements restants avec l'espacement minimal nécessaire entre ledit premier outil (33ₖ) et ledit second outil (33ⱼ);
*d2.* pour le même nombre d'outils (33_{a, b,..., n}) attribués, en choisissant la permutation qui minimise le nombre desdits logements (41_{a,b...,n}) occupés.

3. Procédé selon la revendication précédente, **caractérisé en ce que** ladite étape d. comprend, avant ou après ladite étape d2, l'étape suivante:
*d3.* choisir la permutation dans laquelle lesdits outils (33ₖ, 33ⱼ) à loger dans lesdits logements (41_{a, b,...,n}) sont les outils les plus fréquemment utilisés au cours du travail.

4. Procédé selon l'une quelconque des revendications 2 ou 3, **caractérisé en ce que** ladite étape d. comprend, avant ou après ladite étape d2, l'étape suivante:
*d4.* si un ou plusieurs outils (Uₚ) sont déjà disposés dans lesdits logements (41_{a.b....,n}), calculer les permutations que l'on peut obtenir tant en déplaçant les outils déjà présents dans lesdits logements (41_{a, b,..,. n}) et en disposant les nouveaux outils dans les logements restants (41_{a, b,...,n}) et en choisissant la permutation qui minimise le déplacement des outils (Uₚ) déjà disposés.

5. Procédé selon l'une quelconque des revendications précédentes, **caractérisé en ce que** ladite étape a. comprend au moins l'une des sous-étapes suivantes:
*a1.* réception d'images tridimensionnelles dudit au moins un premier (33ₖ) et deuxième (33ⱼ) outil;
a2. recevoir une photo dudit au moins un premier (33ₖ) et second (33ⱼ) outil et déterminer leurs dimensions;
*a3.* réception d'un balayage tridimensionnel dudit au moins un premier (33ₖ) et deuxième (33ⱼ) outil.

6. Centre d'usinage (C) pour travailler des pièces en bois, plastique, métal, verre, fibre de verre, céramique et autres:
une unité de commande logique (U), dotée d'au moins un programme prédéterminé pour le travail desdites pièces,
au moins un premier et un deuxième porte-outil (32), auxquels peuvent être accouplés respectivement un premier (33ₖ) et un deuxième (33ⱼ) outil pour travailler lesdites pièces selon ledit programme de travail,
au moins un magasin (4), pour loger ledit premier (33ₖ) et second (33ⱼ) outil, une tête d'usinage,
dans lequel ledit centre d'usinage (C) comprend
un dispositif de balayage d'outil (5), connecté à ladite unité de commande logique (U), pour acquérir des données relatives à la forme et aux dimensions dudit au moins un premier (33ₖ) et deuxième (33ⱼ) outil, dans lequel ladite unité de commande logique (U) est capable de commander la tête d'usinage pour mettre en œuvre le procédé selon l'une quelconque des revendications 1-5.

7. Centre d'usinage (C) selon la revendication précédente, **caractérisé**
**en ce que** ledit poste de travail (C) comprend une base (1), et
en ce sens que ledit dispositif de balayage (5) est couplé à ladite base (1).

8. Centre d'usinage (C) selon la revendication 6, **caractérisé**
**en ce que** ledit entrepôt (4) est mobile, et
**en ce que** ledit dispositif de balayage (5) est disposé en correspondance dudit entrepôt (4), pour acquérir lesdites données relatives à la forme et aux dimensions dudit au moins un premier (33ₖ) et second (33ⱼ) outil, lorsqu'ils sont logés dans ledit entrepôt (4).

9. Centre d'usinage (C) selon la revendication 6, **caractérisé par le fait que** le dispositif de balayage (5) peut être couplé à la tête de travail (3) et peut être déplacé à proximité de l'entrepôt (4).

10. Centre d'usinage (C) selon l'une quelconque des revendications 6-9, **caractérisé en ce que** ladite unité de commande logique (U) peut être connectée à un dispositif distant, tel qu'un smartphone, une tablette ou un dispositif en nuage, pour recevoir lesdites données relatives à la forme et aux dimensions dudit au moins un premier (33ₖ) et deuxième (33ⱼ) outil.

11. Programme informatique comprenant des instructions qui, lorsque le programme est exécuté par un ordinateur, amènent l'ordinateur à exécuter le procédé selon l'une quelconque des revendications 1-5.

12. Support de stockage lisible par ordinateur comprenant des instructions qui, lorsqu'elles sont exécutées par un ordinateur, amènent l'ordinateur à exécuter les étapes du procédé selon l'une quelconque des revendications 1-5.
